# EUROPEAN PATENT APPLICATION

(11) **EP 1 553 788 A1**
(43) Date of publication of application: **13.07.2005**
(21) Application number: 04388001.2
(22) Date of filing: 08.01.2004
(51) Int. Cl.: H04Q 7/00

(54) **Storing data items with a position parameter**

(71) Applicant: Sony Ericsson Mobile Communications AB, 221 88 Lund (SE)
(72) Inventor: Ögren, Per, 211 34 Malmö (SE)
(74) Representative: Boesen, Johnny Peder

(57) **Abstract**

A method of storing a data item in a data base in a mobile communications device comprises the steps of generating header information comprising at least one parameter indicative of a present position of the mobile communications device; and storing the data item and the header information together in the data base. When a parameter indicative of the position of the device at the time of storing the data item is stored, it becomes possible to search for the item in different ways. One way is to present a map on a display of the device and show the different types of data items as icons on the map. The user can then easily see where each specific data item was stored, i.e. typically where it was recorded or received. It will normally be easy for the user to remember where, or the context in which, that image was stored.

## Description

### Technical Field of the Invention

The invention relates to a method of storing a data item in a data base in a mobile communications device, and the invention also relates to a mobile communications device comprising a memory for storing a data item in a data base.

### Description of Related Art

Mobile communications devices are used today for many different purposes. In addition to making telephone conversations, such devices may be used for sending messages, transmitting data, and generating, transmitting, receiving and storing multimedia files or items, such as images and sound or video recordings. This typically means that many users will have a large number of items stored in the device for later retrieval. With many items stored, it also becomes more difficult to find a specific item again at a later time. It is therefore important to have a file structure that facilitates the later retrieval and handling of specific items.

Today, the items are typically arranged in a catalogue structure allowing the user to browse through the items. Normally there will be separate lists for each type of file, e.g. one list for images, one for sound recordings, one for video recordings, etc. This means that the user must know the type of the item he is looking for in order to be able to search in the right list. When many files or items of different types are stored, they may be grouped by the date each item is created or stored, but such dates are normally not easy to re-member, especially not the dates of items that were created or stored some time ago. Thus the date does not make it much easier to retrieve a specific item from a large data base in a communications device. The consequence of this is that users often refrain from finding a specific data item, such as an image, because it is too difficult to search for it. The stored items may also be grouped by file type, size of the file or, in case of a data item received from another communications device, by the sender of the data items. These groupings, however, do not make the search for a specific data item any easier.

Therefore, it is an object of the invention to provide a method of storing data items that facilitates the retrieval of a specific data item at a later time, even when the total number of stored items is large.

### Summary

According to the invention the object is achieved in that the method comprises the steps of generating header information comprising at least one parameter indicative of a present position of the mobile communications device; and storing said data item and said header information together in said data base.

When a parameter indicative of the position of the mobile communications device at the time of storing the data item is stored, it becomes possible to search for the item in several different ways. One way could be to present a map on a display of the device and show the different types of data items as icons on the map. The user could then easily see where each specific data item was stored, i.e. typically where it was recorded or received. Although it might be important for the user when e.g. an image was recorded or received, it will normally be much easier for the user to remember where, or the context in which, that image was recorded or received.

When the step of generating header information comprises generating the at least one parameter automatically in the device when said data item is to be stored, the user can just store the data item without having to think of the position. In one embodiment this can be implemented in that the parameter is generated by means of a Global Positioning System receiver. Alternatively, the parameter may be generated based on information obtained from a network to which the device is connected. In both cases, the header information may be generated to further comprise information indicative of an altitude of the mobile communications device, which may be advantageous when setting up search criteria for a specific data item.

In a simpler embodiment, the step of generating header information comprises entering the at least one parameter in the device manually when said data item is to be stored. This allows the advantages mentioned above to be achieved without the need of implementing complex positioning circuits in the device.

Expediently, the at least one parameter may be generated to comprise longitude and latitude for the position, which allows the position to be recognized by other devices, since longitude and latitude are generally used by many types of devices. Alternatively, the at least one parameter may be generated to comprise a name for the position.

A very user-friendly way of finding a specific data item from the data base is achieved when the method further comprises the steps of showing a map on a display of the device; and indicating data items stored in said data base by icons on said map, said icons being arranged on said map according to said at least one parameter. Further, the icons may also indicate a type of the data item.

As mentioned, the invention also relates to a mobile communications device comprising a memory for storing a data item in a data base. When the device comprises means for generating header information comprising at least one parameter indicative of a present position of the mobile communications device; and means for storing said data item and said header information together in said data base, a device is achieved that facilitates the retrieval of a specific data item at a later time, even when the total number of stored items is large.

When the means for generating header information is arranged to generate said at least one parameter automatically in the device when said data item is to be stored, the user can just store the data item without having to think of the position. In one embodiment this can be implemented in that the device is adapted to generate said parameter by means of a Global Positioning System receiver. Alternatively, the device may be adapted to generate the parameter based on information obtained from a network to which the device is connected. In both cases, the device may be adapted to generate the header information to further comprise information indicative of an altitude of the mobile communications device, which may be advantageous when setting up search criteria for a specific data item.

In a simpler embodiment, the means for generating header information may be arranged to provide the at least one parameter from data entered in the device manually when said data item is to be stored. This allows the advantages mentioned above to be achieved without the need of implementing complex positioning circuits in the device.

Expediently, the at least one parameter comprises longitude and latitude for said position, which allows the position to be recognized by other devices, since longitude and latitude are generally used by many types of devices. Alternatively, the at least one parameter may comprise a name for the position.

A very user-friendly way of finding a specific data item from the data base is achieved when the device is further arranged to show a map on a display of the device; and indicate data items stored in the data base by icons on the map, said icons being arranged on the map according to the at least one parameter. Further, the icons may also be arranged to indicate a type of the data item.

The device may further be arranged to receive from another device a data item with header information comprising at least one parameter indicative of a position; and store the received data item together with the received header information in the data base. Alternatively, or in addition, the device may be arranged to receive from another device a data item with header information comprising at least one parameter indicative of a position; generate new header information comprising at least one parameter indicative of a present position of the mobile communications device; and store the received data item and the new header information together in said data base.

In one embodiment, the device may be a mobile telephone adapted for use in a Wideband Code Division Multiple Access system. In another embodiment, the device may be a mobile telephone adapted for use in a GSM system.

### Brief Description of the Drawings

The invention will now be described more fully below with reference to the drawings, in which
figure 1 shows an example of a mobile communications device in which the invention can be implemented,
figure 2 shows a format of a stored data item,
figure 3 shows an example of a display with a list of stored images grouped by position,
figure 4 shows an example of a display with a list of stored data items of different types grouped by position,
figure 5 shows an example of a display with a map with stored data items presented as icons on the map according to position, and
figure 6 shows a display with a map using different icons for different file types.

### Detailed Description of Embodiments

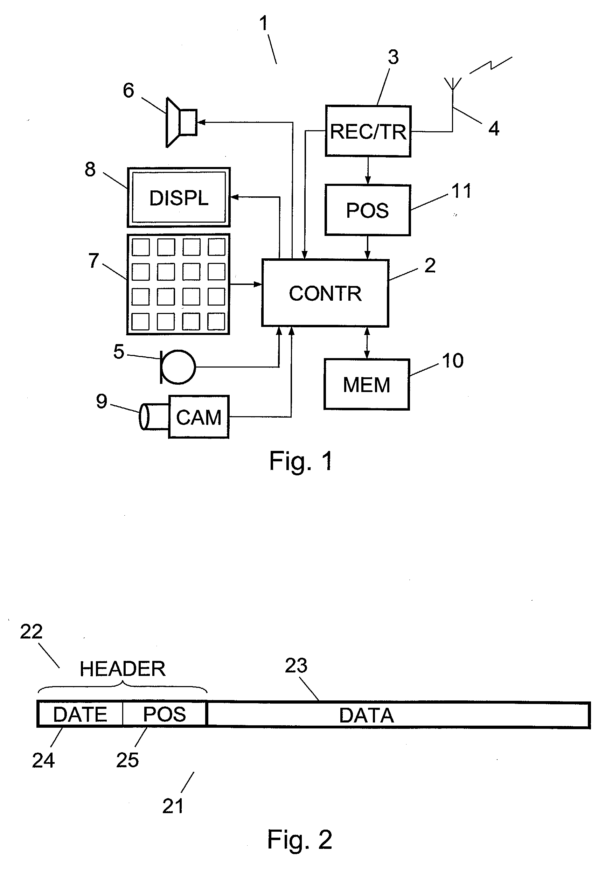

An example of a mobile communications device 1 in which the invention can be implemented is illustrated in figure 1. The device 1 can be a mobile telephone for use in a GSM (Global System for Mobile Communications) system or a UMTS (Universal Mobile Telephone System) / WCDMA (Wideband Code Division Multiple Access) system. The device 1 is controlled by a controller circuit 2, and a receiver/transmitter circuit 3 takes care of the communication with a communications network, e.g. with a number of base stations (not shown), through an antenna 4. Further, the device 1 has a microphone 5, a speaker 6, a keypad 7 and a display 8 in order to handle the normal functions of a mobile telephone. Today, many devices also comprise a digital camera 9, which can either be a camera for capturing single images or a video camera.

A memory 10 allows the controller circuit 2 to store and retrieve information or data items obtained from e.g. the microphone 5, the camera 9, the keypad 7 or the receiver/transmitter circuit 3. Data items could be e.g. messages, images, sound recordings, or video recordings. As examples, an image generated by the camera 9 or received through the receiver/transmitter circuit 3 can be stored in the memory 10 and then at a later occasion retrieved and shown on the display 8, or a sound sequence from the microphone 5 can be stored and then later played via the speaker 6.

When a data item or file is stored in the memory 10, some sort of header information is attached to and stored together with the data item. This header information can include information about the file type (message, image, etc.), the size of the data item, or the date it was stored. When a data item is to be retrieved, a catalogue list of the header information for each stored data item can be shown on the display 8, and, provided the user can recognize the data item searched for from the header information, the data item can be selected from the list and then retrieved.

In order to facilitate the possibility of finding the specific data item searched for, the header information can also include a parameter indicating the position of the device 1 when the data item was stored. This is shown in figure 2. The data item 21 comprises a header field 22 and a data field 23, and in the illustrated embodiment the header field 22 has, in addition to the field 24 showing the date on which the data item was stored, a field 25 showing one or more parameters indicating the position of the device 1 at the time of storing the data item.

The information to be stored in the position field 25 can be generated automatically in the device 1 in a positioning unit 11, which may e.g. comprise a GPS (Global Positioning System) receiver. When a data item is to be stored, the controller circuit 2 requests the current position from the positioning unit 11 and places the result in the position field 25 before the data item is stored in the memory 10. The position information may be in the form of coordinates, such as longitude and latitude. Alternatively, information relating to the current position may be obtained from the network or the base station through the antenna 4 and the receiver/transmitter circuit 3. Also in this case, the position information can be coordinates as above, or it could simply be an identification of the base station currently used by the device 1.

The position information can also be entered by the user of the device 1 by means of the keypad 7. The user could obtain this information from an external device, in which case it could have the same form as above, or he could simply enter the name of the location.

In addition to the geographical position mentioned above, further parameters may also be stored in the position field 25. This could be information relating to humidity, altitude or the name of the person who created the data item.

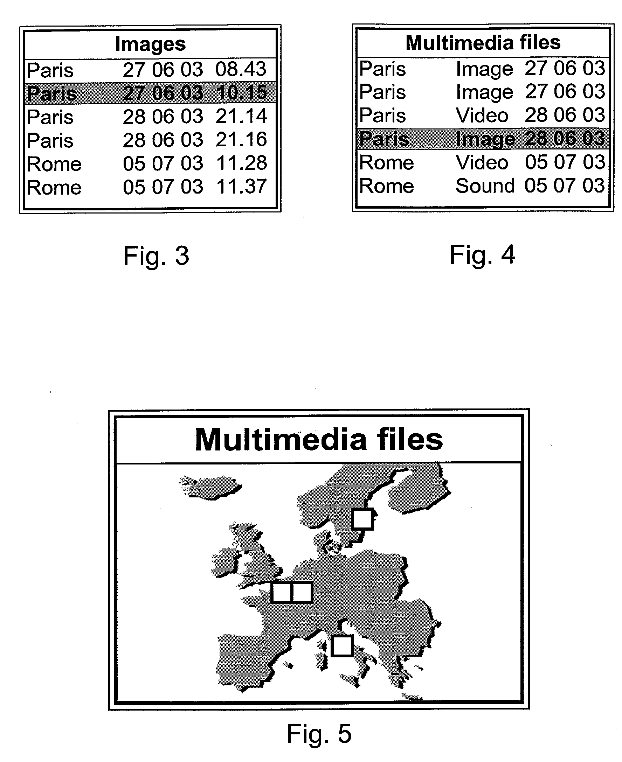

With position information stored together with the data item, it is now possible to search for a specific item in several different ways. If e.g. location names have been entered by the user, the display 7 can show a list of data items arranged according to the names stored together with the items. Figure 3 shows an example where a number of images taken at different locations are shown on the display. It is seen that four images from Paris and two from Rome are presented on the display. Each image is further identified by date and time. One item is highlighted and can be selected by e.g. pressing a yes-key or similar key on the keypad 7. If these items are not the ones searched for, the user can browse through the complete list until the correct one is found. In figure 4 several multimedia file types are presented in the same list, and each item is identified by date and file type, such as image, video, sound, etc. Since the items are grouped by location, it is easy to find a specific item, because the user will normally be able to remember where a given item was stored.

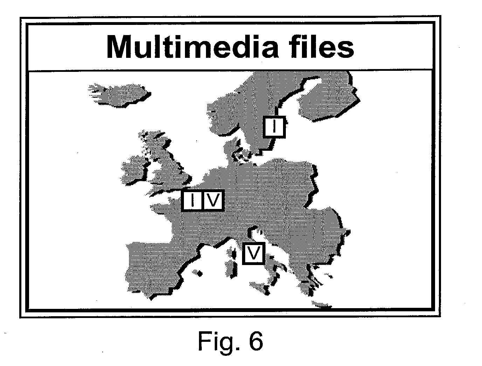

Another possibility would be to show a map on the display 7 and present the stored data items as icons on the map. An example of this is shown in figure 5, in which two data items have been stored in Paris, one in Rome and one in Stockholm. The user can now easily see on the map where each data item was taken, recorded or received, and this makes it very easy to find and select a specific item. Zooming in on the map can give the user more precise information on where e.g. a given picture was taken. Different file types may be indicated by different icons. In figure 6 this is illustrated using the letters "I" for image and "V" for video recording, but any type of symbol could be used as well. If, for instance, the user wanted to retrieve an image taken in Stockholm, he can now simply point at the icon "I" located near Stockholm at the map and then select this item by pressing a key as described before.

As mentioned before, other parameters, such as humidity, altitude or the name of the creator, may be stored together with the position, and these parameters may be used to further facilitate the search for a specific data item. As an example, by using the altitude parameter the user can restrict the search, and thus modify the view of the map, to e.g. only show data items having an altitude between 1 and 10 metres over the ocean. All images that do not fall within these criteria will automatically be hidden. This setting will probably show all beach-related data items, since the beach is normally quite close to the surface of the ocean.

A data item stored in the memory 10 may also be sent to another communications device if the user e.g. wants to share an image or a video recording with a friend. In this case the stored position information may be transmitted together with the data item. When such a data item with position information is received in a communications device, the user can choose to maintain the received position information when the item is stored, so that the item can be searched for by the location where it was originally generated, or the item can be stored with the current position of the device as described above, so that the item can be searched for by the location where it was received.

The way of browsing stored data items described above helps the user to find a specific data item, since the data items with the use of location/position is put into a context which is easy to remember. It also gives a new type of overview of the data items stored in the device and the possibility of a more dynamic grouping than just sorting by file type, date or size.

Although a preferred embodiment of the present invention has been described and shown, the invention is not restricted to it, but may also be embodied in other ways within the scope of the subject-matter defined in the following claims.

## Claims

1. A method of storing a data item (23) in a data base in a mobile communications device (1),
**characterized in that** the method comprises the steps of:
• generating header information (22) comprising at least one parameter (25) indicative of a present position of the mobile communications device; and
• storing said data item (23) and said header information (22) together in said data base.

2. A method according to claim 1, **characterized in that** the step of generating header information comprises generating said at least one parameter (25) automatically in the device (1) when said data item (23) is to be stored.

3. A method according to claim 2, **characterized in that** said parameter (25) is generated by means of a Global Positioning System receiver.

4. A method according to claim 2, **characterized in that** said parameter (25) is generated based on information obtained from a network to which the device is connected.

5. A method according to claim 3 or 4, **characterized in that** said header information is generated to further comprise information indicative of an altitude of the mobile communications device.

6. A method according to claim 1, **characterized in that** the step of generating header information comprises entering said at least one parameter (25) in the device manually when said data item (23) is to be stored.

7. A method according to any one of claims 1 to 6, **characterized in that** said at least one parameter (25) is generated to comprise longitude and latitude for said position.

8. A method according to any one of claims 1 to 6, **characterized in that** said at least one parameter (25) is generated to comprise a name for said position.

9. A method according to any one of claims 1 to 8, **characterized in that** the method further comprises the steps of:
• showing a map on a display (8) of the device; and
• indicating data items stored in said data base by icons on said map, said icons being arranged on said map according to said at least one parameter (25).

10. A method according to claim 9, **characterized in that** said icons also indicate a type of said data item.

11. A mobile communications device (1) comprising a memory (10) for storing a data item (23) in a data base,
**characterized in that** the device comprises:
• means (2; 7; 11) for generating header information (22) comprising at least one parameter (25) indicative of a present position of the mobile communications device; and
• means (2) for storing said data item (23) and said header information (22) together in said data base.

12. A mobile communications device according to claim 11, **characterized in that** the means (2, 11) for generating header information is arranged to generate said at least one parameter (25) automatically in the device (1) when said data item (23) is to be stored.

13. A mobile communications device according to claim 12, **characterized in that** the device is adapted to generate said parameter (25) by means of a Global Positioning System receiver.

14. A mobile communications device according to claim 12, **characterized in that** the device is adapted to generate said parameter (25) based on information obtained from a network to which the device is connected.

15. A mobile communications device according to claim 13 or 14, **characterized in that** the device is adapted to generate said header information to further comprise information indicative of an altitude of the mobile communications device.

16. A mobile communications device according to claim 11, **characterized in that** the means (2, 7) for generating header information is arranged to provide said at least one parameter (25) from data entered in the device manually when said data item (23) is to be stored.

17. A mobile communications device according to any one of claims 11 to 16, **characterized in that** said at least one parameter (25) comprises longitude and latitude for said position.

18. A mobile communications device according to any one of claims 11 to 16, **characterized in that** said at least one parameter (25) comprises a name for said position.

19. A mobile communications device according to any one of claims 11 to 18, **characterized in that** the device is further arranged to:
• show a map on a display (8) of the device; and
• indicate data items stored in said data base by icons on said map, said icons being arranged on said map according to said at least one parameter (25).

20. A mobile communications device according to claim 19, **characterized in that** said icons are also arranged to indicate a type of said data item.

21. A mobile communications device according to any one of claims 11 to 20, **characterized in that** the device is further arranged to:
• receive from another device a data item with header information comprising at least one parameter indicative of a position; and
• store the received data item together with the received header information in said data base.

22. A mobile communications device according to any one of claims 11 to 21, **characterized in that** the device is further arranged to:
• receive from another device a data item with header information comprising at least one parameter indicative of a position;
• generate new header information (22) comprising at least one parameter (25) indicative of a present position of the mobile communications device; and
• store the received data item and the new header information (22) together in said data base.

23. A mobile communications device according to any one of claims 11 to 22, **characterized in that** the device is a mobile telephone adapted for use in a Wideband Code Division Multiple Access system.

24. A mobile communications device according to any one of claims 11 to 22, **characterized in that** the device is a mobile telephone adapted for use in a GSM system.
